# EUROPÄISCHE PATENTSCHRIFT

(11) **EP 2 030 587 B1**
(45) Veröffentlichungstag und Bekanntmachung des Hinweises auf die Patenterteilung: **30.07.2014**
(21) Anmeldenummer: 08163125.1
(22) Anmeldetag: 28.08.2008
(51) Int. Cl.: A61C 1/00

(54) **Vorrichtung und Verfahren zur Dämpfung der Motorschwingungen eines Motors für ein dentales Handstück und dentales Handstück**
Device and method for dampening motor oscillation of a motor for a dental hand tool and a dental hand tool
Dispositif et procédé d'amortissement des vibrations de moteur d'un moteur pour une pièce à main dentaire et d'une pièce à main dentaire

(30) Priorität: 29.08.2007 DE 102007041016
(43) Veröffentlichungstag der Anmeldung: 04.03.2009
(73) Patentinhaber: Sirona Dental Systems GmbH, 64625 Bensheim (DE)
(72) Erfinder: Rein, Matthias, 64653 Lorsch (DE)
(74) Vertreter: Sommer, Peter

(56) Entgegenhaltungen:
- EP-A- 1 949 869
- WO-A-03/089284
- WO-A-2004/082501
- WO-A-2008/008451
- DE-A1- 19 811 787
- GB-A- 2 378 685
- US-B1- 6 191 519

## Beschreibung

### Technisches Gebiet

Die Erfindung betrifft einen Motor für ein dentales Handstück mit einer Motorwelle und einem die Motorwelle aufnehmenden Motorgehäuse, wobei das Motorgehäuse mit dem dentalen Handstück mechanisch verbindbar ist wie in WO 2004/082501 offenbart.

Die Erfindung betrifft des Weiteren ein dentales Handstück mit einem Gehäuse und dem am Gehäuse angeordneten Motor mit der Motorwelle und dem die Motorwelle aufnehmenden Motorgehäuse, wobei das Motorgehäuse mit dem Gehäuse des dentalen Handstücks mechanisch, vorzugsweise lösbar verbunden ist.

Die Erfindung betrifft weiterhin ein Verfahren zum Dämpfen einer Motorschwingung eines Motors für ein dentales Handstück.

### Stand der Technik

Es sind Motoren zum Antrieb von dentalen Handstücken bekannt, die zwecks Dämpfung der motorseitig generierten Schwingungen eine Gummilagerung der Motorlager bzw. des Motors innerhalb des Gehäuses bzw. Handstücks aufweisen. Die als Kugellager ausgebildeten Motorlager bzw. das Motorgehäuse werden dabei in der Regel über O-Ringe gelagert. Alternativ oder ergänzend hierzu versucht man, das Schwingungsverhalten der Motoren mittels kleinerer Fertigungstoleranzen zu optimieren. Letztgenannte Alternative ist sehr teuer und aufwendig. Der Einsatz von O-Ringen ist ebenso nachteilig, da die O-Ringe durch die notwendige Sterilisierungsmaßnahmen betreffend die Dämpfungs- und Abriebeigenschaften beschädigt werden. Ein langlebiger Einsatz ist demnach nicht gewährleistet.

Die Aufgabe der Erfindung besteht darin, einen Motor für ein dentales Handstück derart auszubilden und anzuordnen, dass ein optimales Schwingungsverhalten sowie eine langlebige Lagerung gewährleistet sind.

### Darstellung der Erfindung

Gemäß der Erfindung weisen der Motor, das Gehäuse und/oder das Motorgehäuse einen Schwingungssensor zur Erfassung der motorseitig generierten Motorschwingungen und einen Schwingungsaktor, durch den Gegenschwingungen zu den Motorschwingungen erzeugbar sind, auf, wobei der Schwingungsaktor als separates Bauteil ausgebildet ist oder der Schwingungssensor als Schwingungsaktor einsetzbar ist.

Die Überlagerung der Motorschwingung und der erfindungsgemäß generierten Gegenschwingung führt zu einer insgesamt geringeren Schwingung bzw. Schwingungsamplitude des dentalen Handstücks. Hierdurch wird erreicht, dass die Geräuschentwicklung im Handstück reduziert wird, da der Motor somit eine deutlich geringere Schwingungsamplitude im hörbaren Frequenzbereich in das Handstück einleitet. Es wird eine leisere, vibrationsärmere Nutzung des Handstücks gewährleistet. Der Sensor und der Aktor werden dabei entweder zeitlich versetzt und/oder synchron betrieben. Bei der synchronen Arbeitsweise erfasst der Sensor stets die überlagerte Schwingung des Motors und des Aktors. Je besser das Gegenschwingungsverhalten das Aktors auf den Motor abgestimmt ist, desto kleiner ist die überlagerte Schwingung. Wenn der Sensor und der Aktor zeitlich versetzt eingesetzt werden, kann ein Piezoelement als Sensor und zeitlich versetzt als Aktor eingesetzt werden.

Vorteilhafterweise kann der Schwingungssensor und/oder der Schwingungsaktor als Piezoelement oder auch als Beschleunigungssensor ausgebildet sein. Der Einsatz eines Piezoelements stellt die günstigere Bauteilvariante dar und gewährleistet eine ausreichende Genauigkeit für die gewünschte Schwingungsdämpfung. Der Beschleunigungssensor weist auch ein Piezoelement auf, das auf einer seismischen Masse befestigt ist.

Zudem kann es von Vorteil sein, wenn der Schwingungssensor und der Schwingungsaktor ein gemeinsames Bauteil bilden, einteilig ausgebildet sind oder räumlich eng beieinander liegen. In diesem Fall muss der Motor lediglich mit einem Piezoelement versorgt werden, das die Aufgabe des Sensors und des Aktors übernimmt, was den Aufbau und die Konstruktion des Motors insgesamt vereinfacht. Das Piezoelement wird dabei zeitlich versetzt als Sensor bzw. als Aktor betrieben.

Daneben kann der Schwingungssensor ein- oder mehrteilig ausgebildet sein oder es können mehrere Schwingungssensoren vorgesehen sein. Je nach Anwendungsfall kann es vorteilhaft sein, die Schwingung des Motors nicht nur an einem, sondern an mehreren Punkten, insbesondere im Bereich seiner Lager, zu ermitteln, um eine bestmögliche Gegenschwingung zu erzeugen. Entsprechendes gilt für den Schwingungsaktor betreffend die Einkopplung einer Gegenschwingung.

Weiterhin kann der Schwingungssensor und/oder der Schwingungsaktor mit dem Gehäuse und/oder dem Motorgehäuse kraft-und/oder formschlüssig verbunden sein. Dadurch ist eine notwendige Schwingungsübertragung zwischen Schwingungsaktor bzw. -sensor einerseits und dem Gehäuse bzw. Motorgehäuse andererseits gewährleistet.

Ferner kann der Schwingungssensor und/oder der Schwingungsaktor im Bereich des jeweiligen Motorwellenlagers angeordnet und/oder kraft- und/oder formschlüssig mit diesem verbunden sein. Da die Wellenlager die zentralen Übertragungsstellen darstellen, ist mit der Platzierung des Sensors im Bereich derselben ein optimaler Abgriff der Schwingung und mit der Platzierung des Aktors im Bereich der Lager eine optimale Einbringung der Gegenschwingung gewährleistet.

Zudem kann der Schwingungsaktor zumindest teilkreisförmig ausgebildet und mit Bezug zur Motorwelle in Umfangsrichtung am Motorgehäuse angeordnet sein und der Schwingungsaktor kann kreisscheibenförmig oder zylinderförmig ausgebildet und zumindest in die Oberfläche des Gehäuses und/oder des Motorgehäuses eingebettet sein. Der Schwingungsaktor umgibt den Motor bzw. das Motorgehäuse somit mantelförmig, sodass eine bestmögliche Einkopplung der Gegenschwingung gewährleistet ist. Die Richtung, in der durch ein Piezoelement Gegenschwingungskomponenten generiert werden können, hängt von der Richtung der Polarisierung des Piezoelementes ab. Die Polarisierung kann in radialer Richtung oder in axialer Richtung angeordnet sein. Somit lassen sich entsprechende Gegenschwingungskomponenten erzeugen. Die Richtung der generierbaren Gegenschwingungskomponenten hängt lediglich von der Polarisierung des Piezoelements ab, nicht von dessen Form oder Lagerung.

Vorteilhafterweise kann der Schwingungsaktor mit Bezug zum Motorgehäuse stirnseitig am Motorgehäuse bzw. am Motor angeordnet sein. Die stirnseitige Anbringung des Schwingungsaktors gewährleistet eine größere Bauform desselben mit Rücksicht auf seine Masse und die gewünschte Gegenschwingungsamplitude. Da die Richtung der generierbaren Gegenschwingungskomponenten lediglich von der Polarisierung des Piezoelementes und nicht von dessen Form oder Lagerung abhängig ist, können somit sowohl radiale als auch axiale Gegenschwingungskomponenten generiert werden.

Daneben können mehrere Schwingungsaktoren vorgesehen sein, die mit Bezug zur Motorwelle symmetrisch über die Länge und/oder den Umfang verteilt am Motorgehäuse bzw. am Motor angeordnet sind. Je nach Art und Umfang der Schwingungsquellen ist es von Vorteil, mehrere Schwingungsaktoren den spezifischen Schwingungsquellen, also insbesondere den Wellenlagern zuzuordnen und somit eine optimale Schwingungsdämpfung zu erreichen.

Ebenso kann eine Steuereinheit vorgesehen sein, die ein vom Schwingungssensor generiertes bzw. ermitteltes Signal aufnimmt, ein Gegenschwingungssignal generiert und den Schwingungsaktor mit dem Gegenschwingungssignal ansteuert. Aufgrund der bekannten Drehzahl des Motors ist sein Schwingungsverhalten zumindest teilweise ableitbar, sodass die Steuereinheit unabhängig von dem verlangten Sensorsignal ein Gegenschwingungssignal generieren kann.

Daneben ist es von Vorteil, dass die Motorschwingung von einem Schwingungssensor aufgenommen und von der Steuereinheit erfasst wird, wobei die Steuereinheit mittels des Schwingungsaktors eine Gegenschwingung zur Motorschwingung generiert. Somit wird der Motor bzw. das Handstück gedämpft, so dass die Vibrationsrate sowie die Geräuschentwicklung deutlich reduziert sind.

Hierzu kann es vorteilhaft sein, dass Motorschwingungen im Bereich von 1 kHz bis 5 kHz aufgenommen werden und Gegenschwingungen in diesem Frequenzbereich generiert werden. Insbesondere die hörbaren Frequenzbereiche sind störend und werden ausgeregelt.

### Kurze Beschreibung der Zeichnungen

In den Zeichnungen sind Ausführungsbeispiele der Erfindung dargestellt. Es zeigt die:
- Fig. 1: einen Motor;
- Fig. 2: ein dentales Handstück.

### Ausführungsbeispiel

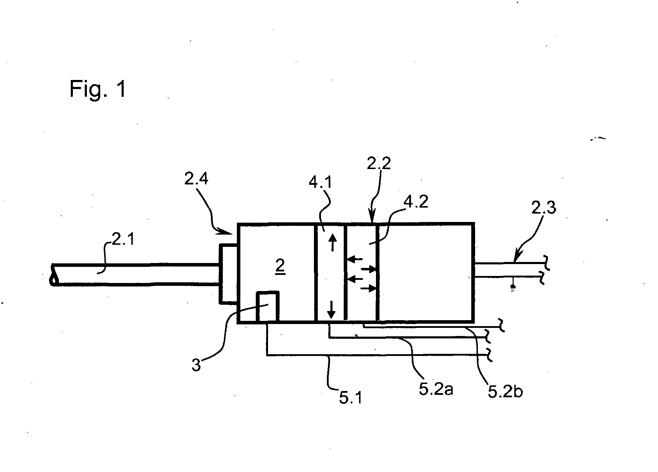

Ein in Fig. 1 dargestellter Motor 2 weist ein Motorgehäuse 2.2 auf, welches zur Lagerung einer Motorwelle 2.1 dient.

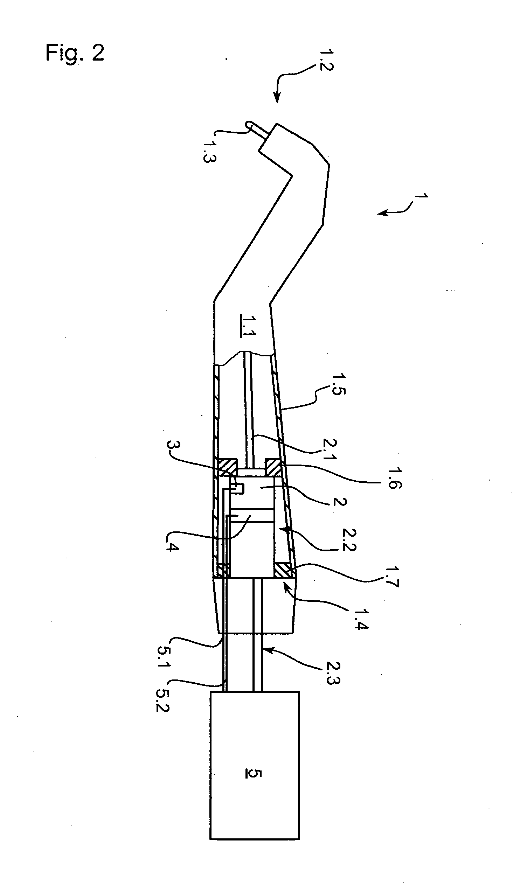

Das Motorgehäuse 2.2 weist einen Schwingungssensor 3 auf, der die vom Motor 2 im Betrieb generierte Schwingung aufnimmt. Diese Schwingung wird über eine sensorseitige Steuerleitung 5.1 von einer Steuer- und Versorgungseinheit 5 gemäß Fig. 2 erfasst.

Zudem sind ein erster Schwingungsaktor 4.1 und ein zweiter Schwingungsaktor 4.2 vorgesehen, die jeweils über eine aktorseitige Steuerleitung 5.2a, 5.2b von der Steuereinheit 5 mit Steuersignalen bzw. Energie versorgt werden. Beide Schwingungsaktoren 4.1, 4.2 sind als Piezoelement ausgebildet. Der erste Schwingungsaktor 4.1 ist in radialer Richtung polarisiert und der zweite Schwingungsaktor 4.2 ist in axialer Richtung polarisiert. Die Polarsierung ist durch die Pfeile im Schwingungsaktor 4.1, 4.2 gekennzeichnet. Mittels des ersten Schwingungsaktors 4.1 lassen sich somit Gegenschwingungen bzw. Gegenschwingungskomponenten in radialer Richtung generieren, während sich mittels des zweiten Schwingungsaktors 4.2 entsprechende Gegenschwingungen in axialer Richtung generieren lassen.

Ein in Fig. 2 dargestelltes dentales Handstück 1 weist ein Gehäuse 1.1 auf, in dem ein Motor 2 zum Antrieb eines an einer Stirnseite 1.2 gelagerten, als Bohrer ausgebildeten Werkzeugs 1.3 angeordnet ist. Der Motor 2 ist im Bereich einer gegenüberliegenden Stirnseite 1.4 des Gehäuses 1.1 axial in das Gehäuse 1.1 eingeschoben. Der Motor 2 wird über eine Spannungsversorgungsleitung 2.3 von der Steuerund Versorgungseinheit 5 mit Energie und Steuersignalen versorgt.

Die Motorwelle 2.1 steht über eine nicht dargestellte Wirkverbindung mit dem Bohrer 1.3 mechanisch im Eingriff.

Der Schwingungssensor 3 ist im Bereich einer Stirnseite 2.4 des Motorgehäuses 2.2 vorgesehen. Er nimmt die vom Motor 2 im Betrieb generierte Schwingung auf. Diese Schwingung wird über eine Steuerleitung 5.1 von der Steuereinheit 5 erfasst.

In Richtung der Motorachse seitlich versetzt zum Schwingungssensor 3 ist ein aus den Schwingungsaktoren 4.1, 4.2 gemäß Fig. 1 gebildeter Schwingungsaktor 4 vorgesehen, der über eine Steuerleitung 5.2 von der Steuereinheit 5 mit Steuersignalen versorgt wird. Der Schwingungsaktor 4 generiert eine Gegenschwingung zur Motorschwingung. Der Schwingungsaktor 4 und der Schwingungssensor 3 sind dabei möglichst nahe der Stelle angeordnet, die am meisten stört bzw. vibriert, vorzugsweise nahe einer Rastaufnahme bzw. eines Rastrings 1.6 und/oder nahe eines Führungsrings 1.7.

Der Schwingungssensor 3 ist gemäß Ausführungsbeispiel Fig. 2 an der Stelle angeordnet, an der die Vibrationen in das Handstück 1 überführt werden, da diese Schwingungen unterdrückt werden sollen. Dies ist vorzugsweise der Bereich einer Gehäusewand 1.5, in dem die vordere Rastaufnahme bzw. der als Gehäuselager dienender Rastring 1.6 für die Aufnahme des Motorgehäuses 2.2 angeordnet ist. Daneben ist alternativ oder ergänzend der Bereich der Gehäusewand 1.5 vorgesehen, in dem der hintere, als Gehäuselager dienender Führungsring 1.7 für das Motorgehäuse 2.2 angeordnet ist, als Position für den Schwingungssensor 3 vorgesehen. Der Schwingungsaktor 4 ist gemäß Ausführungsbeispiel Fig. 2 etwa mittig angeordnet.

In einem nicht dargestellten Ausführungsbeispiel sind der Schwingungsaktor 4 und der Schwingungssensor 3 zusammen in der Nähe des Rastringes 1.6 bzw. in der Nähe der Gehäuselager für den Motor 2 angeordnet.

Je weiter der Schwingungssensor 3 von der Störquelle entfernt ist, desto kleiner ist der Frequenzbereich, der ausgeregelt werden kann. Da die meisten Störungen über den Körperschall des Gehäuses 1.1 übertragen werden, kommt dem Abstand des Schwingungssensors 3 von der Störquelle keine so große Bedeutung zu.

### Bezugszeichen

- 1: dentales Handstück
- 1.1: Gehäuse
- 1.2: Stirnseite
- 1.3: Werkzeug, Bohrer
- 1.4: Stirnseite
- 1.5: Gehäusewand
- 1.6: Rastaufnahme, Rastring
- 1.7: Führungsring
- 2: Motor
- 2.1: Motorwelle
- 2.2: Motorgehäuse
- 2.3: Spannungsversorgungsleitung für Motor
- 2.4: Stirnseite
- 3: Schwingungssensor
- 4: Schwingungsaktor
- 4.1: Schwingungsaktor
- 4.2: Schwingungsaktor
- 5: Steuer- und Versorgungseinheit
- 5.1: Steuerleitung, sensorseitig
- 5.2: Steuerleitung, aktorseitig
- 5.2a: Steuerleitung, aktorseitig
- 5.2b: Steuerleitung, aktorseitig

## Patentansprüche

1. Motor (2) für ein dentales Handstück (1) mit einer Motorwelle (2.1) und einem die Motorwelle (2.1) aufnehmenden Motorgehäuse (2.2), **dadurch gekennzeichnet, dass** der Motor (2) einen Schwingungssensor (3) zur Erfassung der motorseitig generierten Motorschwingungen aufweist und dass der Motor (2) einen Schwingungsaktor (4) aufweist, durch den Gegenschwingungen zu den Motorschwingungen erzeugbar sind.

2. Dentales Handstück (1) mit einem Gehäuse (1.1) und mit einem im Gehäuse (1.1) angeordneten Motor (2) mit einer Motorwelle (2.1) und einem die Motorwelle (2.1) aufnehmenden Motorgehäuse (2.2), wobei das Motorgehäuse (2.2) mit dem Gehäuse (1.1) des dentalen Handstücks (1) lösbar verbunden ist, **dadurch gekennzeichnet, dass** das Gehäuse (1.1) und/oder das Motorgehäuse (2.2) einen Schwingungssensor (3) zur Erfassung der motorseitig generierten Motorschwingungen aufweist und dass das Gehäuse (1.1) und/oder das Motorgehäuse (2.2) einen Schwingungsaktor (4) aufweist, durch den Gegenschwingungen zu den Motorschwingungen generierbar sind.

3. Vorrichtung nach Anspruch 1 oder 2, **dadurch gekennzeichnet, dass** der Schwingungssensor (3) und/oder der Schwingungsaktor (4) als Piezoelement ausgebildet ist.

4. Vorrichtung nach Anspruch 1, 2 oder 3, **dadurch gekennzeichnet, dass** der Schwingungssensor (3) und der Schwingungsaktor (4) ein gemeinsames Bauteil bilden oder einteilig ausgebildet sind.

5. Vorrichtung nach einem der Ansprüche 1 bis 4, **dadurch gekennzeichnet, dass** der Schwingungssensor (3) ein- oder mehrteilig ausgebildet ist oder mehrere Schwingungssensoren (3) vorgesehen sind.

6. Vorrichtung nach einem der Ansprüche 2 bis 5, **dadurch gekennzeichnet, dass** der Schwingungssensor (3) und/oder der Schwingungsaktor (4) mit dem Gehäuse (1.1) und/oder dem Motorgehäuse (2.2) kraft- und/oder formschlüssig verbunden ist.

7. Vorrichtung einem der vorhergehenden Ansprüche 2 bis 6, **dadurch gekennzeichnet, dass** die Motorwelle (2.1) über Motorwellenlager im Gehäuse (1.1) gelagert ist, wobei der Schwingungssensor (3) und/oder der Schwingungsaktor (4) im Bereich des jeweiligen Motorwellenlagers angeordnet und/oder kraft- und/oder formschlüssig mit diesem verbunden ist.

8. Vorrichtung nach einem der vorhergehenden Ansprüche, **dadurch gekennzeichnet, dass** der Schwingungsaktor (4) zumindest teilkreisförmig ausgebildet ist und mit Bezug zur Motorwelle (2.1) in Umfangsrichtung am Motorgehäuse (2.2) angeordnet ist.

9. Vorrichtung nach einem der vorhergehenden Ansprüche 2 bis 8, **dadurch gekennzeichnet, dass** der Schwingungsaktor (4) kreisscheibenförmig oder zylinderförmig ausgebildet und zumindest in die Oberfläche des Gehäuses (1.1) und/oder des Motorgehäuses (2.2) eingebettet ist.

10. Vorrichtung nach einem der vorhergehenden Ansprüche, **dadurch gekennzeichnet, dass** der Schwingungsaktor (4) mit Bezug zum Motorgehäuse (2.2) im Bereich einer Stirnseite am Motorgehäuse (2.2) angeordnet ist.

11. Vorrichtung nach einem der vorhergehenden Ansprüche 1 bis 3 und 5 bis 10, **dadurch gekennzeichnet, dass** mehrere Schwingungsaktoren (4) vorgesehen sind, die mit Bezug zur Motorwelle (2.1) symmetrisch über die Länge und/oder den Umfang verteilt am Motorgehäuse (2.2) angeordnet sind.

12. Vorrichtung nach einem der vorhergehenden Ansprüche, **dadurch gekennzeichnet, dass** eine Steuereinheit (5) vorgesehen ist, die ein vom Schwingungssensor (3) ermitteltes Signal aufnimmt, ein Gegenschwingungssignal generiert und den Schwingungsaktor (4) mit dem Gegenschwingungssignal ansteuert.

13. Verfahren zum Dämpfen einer Motorschwingung eines Motors (2) für ein dentales Handstück (1), **dadurch gekennzeichnet, dass** die Motorschwingung von einem Schwingungssensor (3) aufgenommen und von einer Steuereinheit (5) erfasst wird, wobei die Steuereinheit (5) mittels des Schwingungsaktors (4) eine Gegenschwingung zur Motorschwingung generiert.

14. Verfahren nach Anspruch 13, **dadurch gekennzeichnet, dass** Motorschwingungen im Bereich von 1 kHz bis 5 kHz aufgenommen werden und Gegenschwingungen in diesem Frequenzbereich generiert werden.

## Claims

1. A motor (2) for a dental handpiece (1), comprising a motor shaft (2.1) and a motor housing (2.2) accommodating the motor shaft (2.1), **characterized in that** the motor (2) comprises a vibration sensor (3) for detecting the vibrations generated by the motor, and the motor (2) comprises a vibration actuator (4) by way of which counter-vibrations to the motor vibrations can be generated.

2. A dental handpiece (1) comprising a housing (1.1) and a motor (2), which is disposed in the housing (1.1) and has a motor shaft (2.1) and a motor housing (2.2) accommodating the motor shaft (2.1), the motor housing (2.2) being connected to the housing (1.1) of the dental handpiece (1) so as to be detachable, **characterized in that** the housing (1.1) and/or the motor housing (2.2) comprise a vibration sensor (3) for detecting vibrations generated by the motor, and **in that** the housing (1.1) and/or the motor housing (2.2) comprise a vibration actuator (4) by way of which counter-vibrations to the motor vibrations can be generated.

3. The device according to claim 1 or 2, **characterized in that** the vibration sensor (3) and/or the vibration actuator (4) are designed as piezoelements.

4. The device according to claim 1, 2 or 3, **characterized in that** the vibration sensor (3) and/or the vibration actuator (4) jointly form a component or are designed as one piece.

5. A device according to any one of claims 1 to 4, **characterized in that** the vibration sensor (3) is designed as one piece or in multiple pieces, or multiple vibration sensors (3) are provided.

6. A device according to any one of claims 2 to 5, **characterized in that** the vibration sensor (3) and/or the vibration actuator (4) are non-positively and/or positively connected to the housing (1.1) and/or to the motor housing (2.2).

7. A device according to any one of the preceding claims 2 to 6, **characterized in that** the motor shaft (2.1) is mounted in the housing (1.1) by way of motor shaft bearings, the vibration sensor (3) and/or the vibration actuator (4) being disposed in the region of the respective motor shaft bearing and/or non-positively and/or positively connected thereto.

8. A device according to any one of the preceding claims, **characterized in that** the vibration actuator (4) has an at least semi-circular design and is disposed on the motor housing (2.2) in the circumferential direction in relation to the motor shaft (2.1).

9. A device according to any one of the preceding claims 2 to 8, **characterized in that** the vibration actuator (4) has a circular disk-shaped or cylindrical design and is embedded at least into the surface of the housing (1.1) and/or of the motor housing (2.2).

10. A device according to any one of the preceding claims, **characterized in that** the vibration actuator (4) is disposed on the motor housing (2.2) in the region of an end face in relation to said motor housing (2.2).

11. A device according to any one of the preceding claims 1 to 3 and 5 to 10, **characterized in that** multiple vibration actuators (4) are provided which are disposed on the motor housing (2.2), distributed symmetrically over the length and/or the circumference in relation to the motor shaft (2.1).

12. A device according to any one of the preceding claims, **characterized in that** a control unit (5) is provided which picks up a signal ascertained by the vibration sensor (3), generates a counter-vibration signal, and actuates the vibration actuator (4) using the counter-vibration signal.

13. A method for damping a vibration of a motor (2) for a dental handpiece (1), **characterized in that** the motor vibration is picked up by a vibration sensor (3) and detected by a control unit (5), the control unit (5) generating a counter-vibration to the motor vibration by way of the vibration actuator (4).

14. The method according to claim 13, **characterized in that** motor vibrations in the range of 1 kHz to 5 kHz are picked up and counter-vibrations are generated in this frequency range.

## Revendications

1. Moteur (2) d'une pièce à main dentaire (1), équipé d'un arbre de moteur (2.1) et d'un carter de moteur (2.2) logeant l'arbre de moteur (2.1), **caractérisé en ce que** le moteur (2) présente un capteur de vibrations (3) détectant les vibrations générées côté moteur et **en ce que** le moteur (2) présente un actionneur de vibrations (4) grâce auquel des contre-vibrations peuvent être produites et venir compenser les vibrations du moteur.

2. Pièce à main dentaire (1), équipée d'un boîtier (1.1) et d'un moteur (2), logé dans le boîtier (1.1) et doté d'un arbre de moteur (2.1) et d'un carter de moteur (2.2) logeant l'arbre de moteur (2.1), dans laquelle le carter de moteur (2.2) est relié de façon amovible au boîtier (1.1) de la pièce à main dentaire (1), **caractérisée en ce que** le boîtier (1.1) et/ou le carter de moteur (2.2) présente(nt) un capteur de vibrations (3) détectant les vibrations générées côté moteur et **en ce que** le boîtier (1.1) et/ou le carter de moteur (2.2) présente(nt) un actionneur de vibrations (4) grâce auquel des contre-vibrations peuvent être produites et venir compenser les vibrations du moteur.

3. Dispositif selon la revendication 1 ou 2, **caractérisé en ce que** le capteur de vibrations (3) et/ou l'actionneur de vibrations (4) se présente(nt) sous forme d'élément piézoélectrique.

4. Dispositif selon la revendication 1, 2 ou 3, **caractérisé en ce que** le capteur de vibrations (3) et l'actionneur de vibrations (4) forment un assemblage commun ou sont monobloc.

5. Dispositif selon les revendications 1 à 4, **caractérisé en ce que** le capteur de vibrations (3) est monobloc ou composé de plusieurs parties ou **en ce qu'**il comprend plusieurs capteurs de vibrations (3).

6. Dispositif selon l'une des revendications 2 à 5, **caractérisé en ce que** le capteur de vibrations (3) et/ou l'actionneur de vibrations (4) est/sont relié(s) au boîtier (1.1) et/ou au carter de moteur (2.2) par la force et/ou par conjugaison des formes.

7. Dispositif selon l'une des revendications précédentes 2 à 6, **caractérisé en ce que** l'arbre de moteur (2.1) est logé dans le boîtier (1.1) via un support pour arbre de moteur, dans lequel le capteur de vibrations (3) et/ou l'actionneur de vibrations (4) est/sont placé(s) dans la zone du support pour arbre de moteur correspondant et/ou est/sont relié(s) à ce dernier par la force et/ou par conjugaison des formes.

8. Dispositif selon l'une des revendications précédentes, **caractérisé en ce que** l'actionneur de vibrations (4) se présente au moins sous la forme d'un cercle primitif et est positionné dans le carter de moteur (2.2), par rapport à l'arbre de moteur (2.1), dans le sens de la circonférence.

9. Dispositif selon l'une des revendications précédentes 2 à 8, **caractérisé en ce que** l'actionneur de vibrations (4) se présente sous la forme d'un disque circulaire ou d'un cylindre et est au moins intégré à la surface du boîtier (1.1) et/ou du carter de moteur (2.2).

10. Dispositif selon l'une des revendications précédentes, **caractérisé en ce que** l'actionneur de vibrations (4) est positionné, par rapport au carter de moteur (2.2), sur une face du carter de moteur (2.2).

11. Dispositif selon l'une des revendications précédentes 1 à 3 et 5 à 10, **caractérisé en ce qu'**il comprend plusieurs actionneurs de vibrations (4), répartis dans le carter de moteur (2.2), par rapport à l'arbre de moteur (2.1), de manière symétrique dans la longueur et/ou dans la circonférence.

12. Dispositif selon l'une des revendications précédentes, **caractérisé en ce qu'**il comprend une unité de réglage (5) qui reçoit un signal émis par le capteur de vibrations (3), génère un signal de contre-vibrations et commande l'actionneur de vibrations (4) avec le signal de contre-vibrations.

13. Procédé d'atténuation d'une vibration de moteur d'un moteur (2) d'une pièce à main dentaire (1), **caractérisé en ce que** la vibration de moteur est détectée par un capteur de vibrations (3) et est enregistrée par une unité de réglage (5) qui génère, via l'actionneur de vibrations (4), une contre-vibration qui vient compenser la vibration du moteur.

14. Procédé selon la revendication 13, **caractérisé en ce que** les vibrations de moteur enregistrées sont comprises dans une plage allant de 1 kHz à 5 kHz et **en ce que** les contre-vibrations générées sont comprises dans cette plage de fréquences.
